# EUROPEAN PATENT APPLICATION

(11) **EP 4 787 170 A1**
(43) Date of publication of application: **05.08.2026**
(21) Application number: 25305158.5
(22) Date of filing: 04.02.2025
(51) Int. Cl.: G06F 11/3668, G06F 8/71

(54) **A METHOD FOR DETERMINING A SET OF TESTS TO CONDUCT ON AN EXECUTABLE SOFTWARE PRODUCT, DEVICE AND CORRESPONDING COMPUTER PROGRAM**

(71) Applicant: SCHNEIDER ELECTRIC INDUSTRIES SAS, 92500 Rueil-Malmaison (FR)
(72) Inventor: BELGHITH, Toufik, 06140 VENCE (FR); SERVANT, Clément, 06210 MANDELIEU LA NAPOULE (FR)
(74) Representative: Plasseraud IP

(57) **Abstract**

The present disclosure relates to a method for determining a set of tests to conduct on an executable software product. Executed by an electronic apparatus with at least one processing unit and memory, the method involves obtaining a matrix of components (CCM), a two-dimensional square matrix that represents relationships between software components in a first version of the source code. Additionally, a matrix of features (CFM) is obtained, mapping relationships between these components and the features they support. Utilizing both matrices, the method selects at least one test from a set of tests to conduct on the software product. This selection is based on modifications detected in a second version of the source code, ensuring that only relevant tests are performed, thereby optimizing the testing process.

## Description

### Domain of the invention

The disclosure relates to the field of software and firmware testing., More Specifically, the disclosure focuses on optimizing the identification of tests to conduct when delivering a new version of a software or firmware product.

### Prior Art

In the field of software and firmware testing, traditional approaches often involve exhaustive testing procedures that aim to cover all possible scenarios. This method, while thorough, is time-consuming and resource-intensive. Typically, developers rely on manual processes or basic automated scripts to identify which tests to conduct after a code modification. These methods do not efficiently address the challenge of pinpointing the minimal set of tests required, leading to increased costs and delayed time-to-market.

Current solutions in the industry include static code analysis tools and dependency tracking systems. These tools can identify direct dependencies between components, but they often fall short in mapping the intricate relationships between components and features. As a result, they may not provide a comprehensive view of the potential impacts of code changes. This limitation can lead to either over-testing, where unnecessary tests are conducted, or under-testing, where critical tests are overlooked, both of which can affect product quality and user satisfaction.

Moreover, some advanced systems attempt to use artificial intelligence and machine learning to predict the impact of code changes. While these systems show promise, they are still in the developmental stages and require significant data to train effectively. They also tend to focus on specific types of software architectures, limiting their applicability across diverse systems. Consequently, there remains a need for a more reliable and universally applicable method to efficiently identify the necessary tests, ensuring high-quality software delivery without unnecessary expenditure of resources.

### Summary of the disclosure

The disclosure allows solving at least part of the above problem.

The disclosure more specifically relates to a method for determining a set of tests to conduct on an executable software product, the method being executed by an electronic apparatus comprising at least one processing unit and at least one memory. According to the disclosure, the comprises:
- obtaining a matrix of components, wherein the matrix is a two-dimensional square matrix representing relationships between at least two software components defined in a first version of a source code of said software product,
- obtaining a matrix of features, wherein the matrix is a two-dimensional data structure mapping relationships between said at least two software components and at least two features supported by said at least two software components,
- with said matrix of components and said matrix of features, selecting, among a set of tests, at least one test to conduct on said executable software product, wherein selecting is performed as a function of a modification made on a second version of the source code of said software product, the modification being detected in at least one of said at least two software components.

Hence, it is possible to efficiently and accurately identify the minimal set of tests required for an executable software product following modifications to its source code. By utilizing a matrix of components to represent relationships between software components and a matrix of features to map these components to supported features, the method ensures that only relevant tests are selected. This targeted approach reduces unnecessary testing, optimizes resource allocation, and accelerates the testing process, enhancing product quality and reducing time spent for testing.

According to a characteristic, obtaining the matrix of components comprises:
- determining, with said first version of the source code, the at least two components,
- categorizing the first version of the source code accordingly, using a data structure to store the identification of each component, wherein, in said first version of the source code, each source code element belongs to one only of the at least two components,
- analyzing the first version of the source code to determine dependencies between the at least two components and creating and/or updating the matrix of components as a function of the dependencies.

Hence, the method ensures that each element of the source code is accurately associated with a specific component. This categorization facilitates the identification of dependencies between components, allowing for the creation and continuous updating of the matrix of components. As a result, the method provides a clear and comprehensive view of component interactions, enabling efficient impact analysis and ensuring that any modifications to the source code are thoroughly understood and addressed.

According to a characteristic, analysing the first version of the source code to determine dependencies between the at least two components comprises implementing a recursive data structure to identify dependencies between components, including direct function calls, file inclusions, or object relationships.

According to a characteristic, obtaining the matrix of features comprises:
- obtaining, from a data structure, the at least two features of the executable software product,
- associating, in the matrix of features, each feature of the at least two features with at least one component of the at least two components determined from said first version of the source code, indicating which components contribute to each feature.

Thus, the method provides a clear and organized representation of how components contribute to the overall functionality of the software product. This mapping facilitates targeted testing by ensuring that all features impacted by code changes are identified and addressed. Consequently, the method enhances the efficiency of the testing process, reduces the likelihood of overlooking critical functionalities, and supports better resource allocation. This structured approach ultimately leads to improved software quality and reliability, as it ensures comprehensive validation of the product's features.

According to a characteristic, selecting is performed on the basis of a third matrix, the third matrix being obtained by combining the matrix of components and the matrix of features so that for each feature of the software product, the components associated to this feature are each marked with a predetermined value in their respective cell.

According to a characteristic, selecting, among the set of tests, the at least one test to conduct on said executable software product comprises:
- Identifying at least one difference between content of at least one file of the source code of the first version and content of at least one corresponding file of the source code of the second version, thus obtaining a list of components in which the at least one difference is present,
- identifying, a list of features impacted by said at least one difference,
- with the list of features impacted by said at least one difference, determining among the set of tests, the at least one test to conduct on said executable software product.

According to a characteristic, the list of features impacted by the at least one difference is performed as a function of said matrix of components and said matrix of features.

According to a characteristic, the list of features impacted by the at least one difference is performed ) is performed on the basis of a third matrix, the third matrix being obtained by combining the matrix of components and the matrix of features so that for each feature of the software product, the components associated to this feature are each marked with a predetermined value in their respective cell.

According to a characteristic, the set of tests is stored in a database in which each test to perform is associated to at least one feature of said executable software product.

In another aspect, the disclosure also relates to an electronic apparatus for determining a set of tests to conduct on an executable software product, the electronic apparatus comprising at least one processing unit and at least one memory. According to the disclosure, the electronic apparatus being further configured for:
- obtaining a matrix of components, wherein the matrix is a two-dimensional square matrix representing relationships between at least two software components defined in a first version of a source code of said software product,
- obtaining a matrix of features, wherein the matrix is a two-dimensional data structure mapping relationships between said at least two software components and at least two features supported by said at least two software components,
- with said matrix of components and said matrix of features, selecting, among a set of tests, at least one test to conduct on said executable software product, wherein selecting is performed as a function of a modification made on a second version of the source code of said software product, the modification being detected in at least one of said at least two software components.

According to a preferred implementation, the various steps of the methods according to the disclosure are implemented by one or more software or computer programs, comprising software instructions intended to be executed by a data processor of a relay module according to the disclosure and being designed to control the execution of the various steps of the methods.

Consequently, the disclosure also targets a program capable of being executed by a computer or by a data processor, this program comprising instructions for controlling the execution of the steps of a method as mentioned above. This program can use any programming language, and be in the form of source code, object code, or intermediate code. The disclosure also targets an information medium readable by a data processor, and comprising instructions of a program as mentioned above. The information medium can be any entity or device capable of storing the program, for example a storage means, a microelectronic circuit, or a magnetic or optical recording means. On the other hand, the information carrier may be a transmissible medium such as an electrical or optical signal, which may be conveyed via an electrical or optical cable, by radio or by other means. The program, according to the disclosure may in particular be downloaded from a network such as the Internet. Alternatively, the information carrier may be an integrated circuit in which the program is incorporated, the circuit being adapted to execute or to be used in the execution of the method in question. According to one embodiment, the disclosure is implemented by means of software and/or hardware components. With this in mind, the term "module" may correspond in this document to a software component, a hardware component or a set of hardware and software components. Each component of the system described above of course implements its own modules. The different embodiments mentioned above can be combined with each other for the implementation of the disclosure.

### Description of Drawings

Other features and advantages of the invention will appear more clearly on reading the following description of an embodiment of the invention, given as a simple illustrative and non-limiting example, and the appended drawings among which:
- Figure 1 illustrates the method according to the disclosure,
- Figure 2 represent an apparatus for implementing the method of the disclosure.

### Description of an embodiment

The disclosure presents a method for optimizing the identification of tests required when delivering a new version of a software, firmware product or device integrating them. It addresses the challenge of determining the minimal set of functional tests necessary by utilizing two matrixes: one that reports the relationships between different software or firmware components, and another that reports the relationships between components and product features. When a developer modifies the code, the first matrix helps identify impacted components, which are then cross-referenced with the second matrix to determine affected features. This approach enhances product quality by ensuring comprehensive testing while reducing time and costs.

With respect to the disclosure, the following definitions are provided. A Feature or Functionality is a set of functions or capabilities of the software that provides the ability to perform a specific task. For instance, the ability for a programmable controller to control a predetermined actuator is a feature and the ability to read a sensor is also a feature. Examples of features are "User Authentication", "E-commerce Shopping Cart", "Data Analytics Dashboard", "Backup System", "Search Functionality", "User Profile Management", "Multi-language Support", "Synchronization", "Geolocation", "Data acquisition", "Telemetry", "Communication".

A Component is a subset of the source code of the software that is classified as part of the same group, based on a predefined criterion. Any means or tool that can classify the source code based on a predefined criterion can be used to get the list of components. For instance, the source code files that contain source code that is used to control the actuator and sensor capability of a programmable controller could be classified as belonging to the "IO manager component". Other examples of components that could be determined in source code could be: User Interface (UI) Components, Data Access Components, Business Logic Components, Communication Components, Utility Components, Security Components, Third-party Integration Components, Testing Components, Configuration Management Components, Concurrency and Threading Components, Hardware component (chip, ASIC, coprocessor, artificial intelligence processor or resource, cryptographic processor or resource, etc.). These components can often be identified through patterns in naming conventions, directory structures, class hierarchies, function calls, access to registers or resources. For example, a group of classes with names like "Userlnterface", "UIComponent", or "View" might indicate UI components, while classes named "DataAccess", "Repository", or "DAO" could signify data access components. The specific components identified vary depending on the nature and architecture of the software/mix software/hardware being analyzed.

A Test or Test Case is the procedure followed to verify that a software fulfills a feature or functionality definition. It can be automatized or manual, running on a simulated/emulated environment or on a real executable software/hardware product. The Matrix of Component is the two dimensions square matrix of order *the number of components* where, for each component *m* and *n,* if a relationship exists between the components the cell value is "*1*" or *"True"* otherwise the cell value is "*0*" or "*False*" or Empty. The diagonal of the matrix which represents the dependency of a component versus itself is irrelevant. A Component relationship is present when two components fulfill a predefined predicate that indicates an impact of one component onto the other (e.g. a current component uses resources, object or function of another component, a current component instantiates a resource, an object of another component, etc.). Possibly a hierarchy of components is defined. The Matrix of Features or Matrix of Functionalities is the two dimensions matrix of order *number of components x number of features or functionalities* where for each component that participates to the feature or functionality the cell value is "1" or "True", otherwise it is "0" or "False".

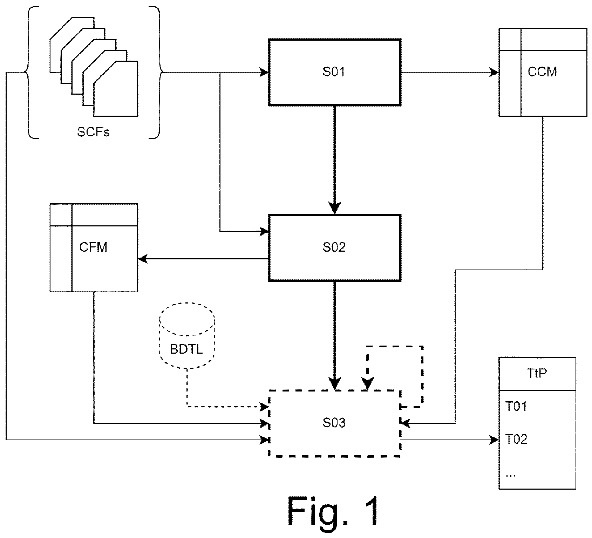

The method's effectiveness is further illustrated in Figure 1, which provides a detailed explanation of the process.

The first step S01 in the disclosed method involves obtaining the matrix of components CCM - standing for "component-to-component matrix", which is used by the process of identifying necessary tests. *"Obtaining"* means i.e. creating in the case the matrix of components CCM is inexistant, or loading from a memory in the case the of components CCM is already present for the executing device. This matrix is a two-dimensional square matrix that represents the relationships between different software or firmware components. Each component is classified into a group based on predefined criteria, such as functionality or code structure. The matrix is constructed by analysing the source code to determine dependencies between components. These dependencies can be identified through various means, including direct function calls, file inclusions, or object relationships as depicted in UML representations.

To build this matrix, a first sub-step comprises defining a list of components and categorize the source code SCFs accordingly. This categorization can be achieved using tools like static code analysis, which automatically identifies relationships based on predefined predicates. For instance, a direct function call from one component to another indicates a dependency, which is then marked in the matrix. Other relationships, such as inheritance (in object programming) or aggregation, can also be captured to provide a comprehensive view of component interactions.

The matrix of components CCM can be dynamic; it can evolve with the software as new components are added or existing ones are modified. The matrix of components CCM can be created early in the product's lifecycle, during the architecture phase, and maintained throughout the design and maintenance phases. This ongoing update ensures that the matrix of components CCM accurately reflects the current state of the software.

More specifically, the construction of this matrix of components CCM may occur at any stage of the life of the software but ideally it should occur as early as possible from the architecture phasis. It is then maintained and completed throughout the design or maintenance phasis whenever there is a code change. The first step for the construction of this matrix of components CCM is to define the list of components and categorize the source code to split it between those components. Categorization of the source code means for example that objects (or methods, or functions) are grouped when they commit to a similar goal or activity. Apart manual identification, there are several other ways to determine components in source code that achieve a common "goal", using "software component identification" or "program decomposition" techniques for example: Static code analysis, Functional decomposition, Community detection algorithms, Naming pattern analysis, Object-oriented decomposition, Call Graph (CG) analysis, Semantic-correctness model. These methods involve creating a representation of the code structure, such as a class interaction graph or a functional decomposition diagram and then applying algorithms or heuristics to identify cohesive groups of code that form components.

The construction of the matrix of components CCM involves utilizing several data structures to efficiently manage and represent the relationships between software components. Initially, a data structure is employed to store the identification of each component. This structure serves as a repository for all components, allowing for easy access and management. Each component is assigned a unique identifier, which facilitates the tracking and referencing of components throughout the matrix construction process.

In addition to the component identification data structure, a recursive data structure is used to identify and represent the relationships between components. This recursive structure is designed to capture the dependencies and interactions among components, enabling a comprehensive mapping of component relationships. By employing recursion, the data structure can dynamically adapt to changes in the software architecture, such as the addition of new components or the modification of existing ones.

The recursive data structure works in tandem with the component identification data structure to populate the matrix of components CCM. As the source code is analysed, the recursive structure identifies dependencies, such as direct function calls or object relationships, and updates the matrix accordingly. This approach ensures that the matrix accurately reflects the current state of the software, providing a reliable foundation for subsequent testing and analysis. The construction of the matrix of components CCM is thus streamlined and efficient process, capable of adapting to the evolving nature of software development.

As indicated previously, the relationship or dependency between components can then be determined by any mean or tool that is able to verify a predefined predicate like the expertise of a human, a static code analysis tool, Al, etc. For instance, one can define a predicate that indicates a relationship between two components whenever there is a direct function call from one component to the other. Another example could be when an object from one component is composed of an object from another component based on UML diagrams. Examples of dependencies between components could be (but not limited to):
- a direct function call from one component to the other,
- an include of files from one component to the other,
- a composition relation between two objects in the source code,
- an inheritance relation between two objects in the source code,
- an aggregation relation between two objects in the source code,
- an association relation between two objects in the source code,
- a human expert knowledge,
- the result of a static code analysis,
- the result of a technical documentation,
- a common hardware resource.

For instance, the following matrix of components CCM describes components c1, c2, c3 where component c1 has a relationship with component c2 and component c2 has a relationship with both component c1 and c3, c6 with C2 and C1, etc.:

| | C1 | C2 | C3 | C4 | C5 | C6 |
|---|---|---|---|---|---|---|
| C1 | | 1 | | | | 1 |
| C2 | 1 | | 1 | | | 1 |
| C3 | | 1 | | 1 | | |
| C4 | | | 1 | | 1 | |
| C5 | | | | 1 | | |
| C6 | 1 | 1 | | | | |

According to the disclosure, components relationships are not oriented. This means that, for example, a relationship between two components impacts both components.

The second step (S02) in the disclosed method involves obtaining the matrix of features or functionalities CFM -called matrix of features CFM in the rest of the description (- standing for "component-to-feature matrix"), which is used to identify the necessary tests to conduct. *"Obtaining"* means i.e. creating in the case the matrix of features CFM is inexistant, or loading from a memory in the case the matrix of features CFM is already present for the executing device. This matrix of features CFM is a two-dimensional construct that maps the relationships between software components and the features or functionalities they support. This second step comprises a feature listing sub-step for identifying all the features or functionalities of the product, which are essentially the tasks or capabilities the software is designed to perform. Each feature is then associated with one or more components from the previously created component matrix, indicating which components contribute to each feature.

The construction of this matrix is based on the software's features and how they are implemented within the software architecture. This involves analysing (i.e. parsing, sectoring, static code analysis, feature extraction) the source code and documentation to determine which components are involved in realizing each feature. The association is marked in the matrix, where a component's participation in a feature (i.e. opening a file, loading a file, cyphering a file, displaying a chart, etc.) is indicated by a true or false value. This mapping allows for a comprehensive view of how components contribute to the overall functionality of the product.

The matrix of features is dynamic and should be updated as the software evolves. As new features are added or existing ones are modified, the matrix is revised to reflect these changes. This ensures that the matrix remains an accurate representation of the software's current state, facilitating the identification of features impacted by code changes.

Hence, in other words, once the matrix of components CCM is created, the matrix of features CFM by listing the features or functionalities of the product on one hand then associating all components from the matrix of components to one or several features or functionalities. This means that a component can participate to several features or functionalities and logically there is no component that does not participate to any feature or functionality.

For instance, the following matrix of features CFM describes the components c1, c2 and c3 that participates to feature or functionality F1 and F2 where c1 participates only to F1, c2 participates to both F1 and F2 and c3 participates only to F2:

| | | |
|---|---|---|
| | *F*1 | *F*2 |
| *c*1 | 1 | |
| *c*2 | 1 | 1 |
| *c*3 | | 1 |

For the purpose of this example, which follows the one exposed in relation with the matrix of components CCM, components C4, C5 and C6 are not directly linked to any of the features F1 or F2. In this example, C4, C5 and C6 are supposed to be used (and/or accessed and/or instantiated) by components C1, C2 and/or C3. This, advantageously, allows creating a simpler matrix of features CFM, focusing on component that (directly) participate to feature determination.

By combining these matrices, it can efficiently be determined which features require testing (in case of component modification), thereby optimizing the testing process and ensuring that all relevant functionalities are validated. Furthermore, the matrix of components allows to quickly identify which components are impacted by code changes. By maintaining an up-to-date matrix, the method facilitates efficient impact analysis, reducing the risk of overlooking critical dependencies that could affect the software's functionality. In addition, the matrix of features serves as a valuable tool for project management and quality assurance. It provides a clear linkage between the software's architecture and its functional requirements, enabling better communication among team members and stakeholders. This matrix not only aids in test planning but also helps in prioritizing testing efforts based on the criticality of features, ultimately contributing to a more reliable and robust software product.

These two steps (and resulting matrices) are thus used to determine the tests to execute after one or several components are modified. The matrix of features CFM and the matrix of components CCM are then stored in (and/or made available for) a CI tool, in the context of version control push. The CI tool is (part of) a software system that automatically triggers and executes a series of predefined tasks when code changes are pushed to a shared repository. According to the disclosure, the CI tool is configured to automate the process of integrating, building, and testing code changes, ensuring that new code integrates with the existing codebase. According to the disclosure, the CI tool is configured to use the matrix of components CCM and the matrix of features CFM.

When developers push their code changes to the central repository, the CI tool uses the matrices to determine the specific tests that need to be performed. This third step S03, which is performed later, (i.e. not consecutively, possibly quite a long time, after the matrices CCM and CFM are created) comprises for example using a predetermined list of tests (stored in a database for example - BDTL), where each test corresponds to at least one feature. The process begins by identifying the features impacted by a code modification, using the matrices CCM and CFM to trace the changes back to the affected features. Once the impacted features are identified, the corresponding tests (T01, T02, ...) are extracted from the preset list and are selected for execution, when such a preset list exists. The list of tests to perform TtP can be directly performed by the CI Tool, after the code is compiled and new version of the software is created. The list of tests to perform TtP can be presented to the developer or the tester, on a dedicated human to machine interface of the CI Tool to allow the developer or the tester to manually perform these tests.

In some implementations, a third matrix (which mixes/combines the content of matrices CCM and CFM) can be built (e.g. by the CI tool). This (temporary) third matrix may be stored (or cached) in a dedicated location available to the CI tool. This third matrix consists in merging the piece of data of both matrices CCM and CFM. Following the previous illustrated example, this third matrix would be:

| | F1 | F2 |
|---|---|---|
| C1 | 1 | |
| C2 | 1 | 1 |
| C3 | | 1 |
| C4 | | 1 |
| C5 | | 1 |
| C6 | 1 | 1 |

The explanations are as follow: there's a relationship between C4 and C3 and between C4 and C5. Hence, any modification of C4 or C5 potentially impacts C3, and in consequence F2, even if the sole relationship of C5 is with C4. Regarding C6, a relationship exists with C1 and C2, meaning any modification in C6 impact potentially C1 and C2, and then feature F1. In the same way, reversely, any modification in C1 impact potentially C6 and C2. This third matrix is a much more complex matrix, specifically in case of large and complex systems embracing multiples functionalities. As a function of the implementations, obtaining this third matrix may be skipped. In these cases, this third matrix is directly replaced by the matrix of features CFM, which directly comprises le full list of components and their global relationships with the features. The advantage of calculating three matrices lies on the ability to work solely on "top" components (i.e. components of higher level) for building functionalities, while not taking bothering with "low level" components for feature identification and classification.

This approach streamlines the testing process by focusing only on the tests relevant to the modified features, thereby reducing unnecessary testing and optimizing resource allocation. The matrix of features CFM acts as a bridge between the software's architecture and the testing framework, ensuring that all relevant tests are conducted without overlooking any critical functionalities. By maintaining an up-to-date matrix, developers can quickly adapt to changes in the software, ensuring that the testing process remains aligned with the current state of the product. Moreover, this method allows for a more targeted testing strategy, where tests are prioritized based on the impact of the changes. This prioritization helps in managing testing resources effectively, ensuring that high-impact features are thoroughly tested while minimizing the time spent on less critical areas. The use of a predetermined list of tests also facilitates automation, as the tests can be systematically executed based on the matrix's output, further enhancing the efficiency of the testing process. In addition to optimizing the testing process, this step also contributes to improved product quality and reliability. By ensuring that all impacted features are tested, the method reduces the risk of undetected regressions and enhances user satisfaction. The systematic approach to test selection and execution also provides a clear audit trail, which can be valuable for quality assurance and compliance purposes. Overall, the use of the matrix of features in conjunction with a preset list of tests offers a robust framework for managing the complexities of software testing in a dynamic development environment.

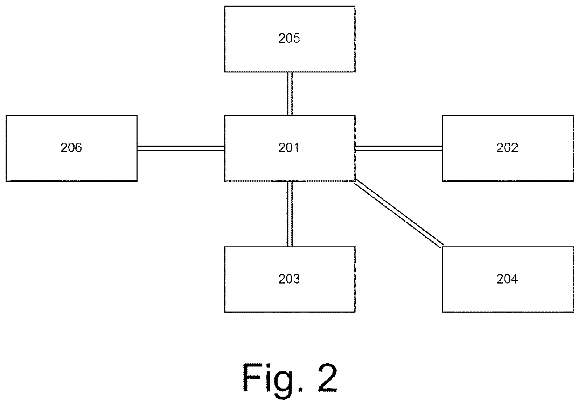

The apparatus for implementing the proposed method, described in reference with figure 2, comprises an electronic device equipped with at least one processing unit and a memory module. The processing unit, referenced as element 201, is responsible for executing the software instructions that implement the method. It is capable of performing complex computations and managing data flow between various components of the apparatus. The memory module, referenced as element 202, stores the software instructions, the matrix of components (CCM), and the matrix of features (CFM), as well as any intermediate data generated during the execution of the method.

The apparatus further includes a data input interface, referenced as element 203, which facilitates the acquisition of the first and second versions of the source code. This interface can be connected to a network or a local storage device, allowing the apparatus to access the necessary code files for analysis. Additionally, a data output interface, referenced as element 204, is provided for communicating the results of the test selection process. This interface can be used to transmit the list of selected tests to a testing framework or to display the results to a user.

To support the execution of the method, the apparatus is equipped with a software module, referenced as element 205, which contains the algorithms and logic required to create and update the matrices (CCM and CFM) and to select the appropriate tests. This software module is designed to interact seamlessly with the processing unit and memory module, ensuring efficient execution of the method. The apparatus may also include a user interface, referenced as element 206, which allows users to configure the method parameters, view the matrices, and monitor the test selection process. This interface can be implemented as a graphical user interface (GUI) or a command-line interface (CLI), depending on the specific requirements of the application.

## Claims

1. A method for determining a set of tests to conduct on an executable software product, the method being executed by an electronic apparatus comprising at least one processing unit and at least one memory, wherein the method comprises:
- obtaining (S01) a matrix of components (CCM), wherein the matrix is a two-dimensional square matrix representing relationships between at least two software components defined in a first version of a source code of said software product,
- obtaining (S02) a matrix of features (CFM), wherein the matrix is a two-dimensional data structure mapping relationships between said at least two software components and at least two features supported by said at least two software components,
- with said matrix of components (CCM) and said matrix of features (CFM), selecting (S03), among a set of tests, at least one test to conduct on said executable software product, wherein selecting is performed as a function of a modification made on a second version of the source code of said software product, the modification being detected in at least one of said at least two software components.

2. The method according to claim 1, **characterized in that** obtaining (S01) the matrix of components (CCM) comprises:
- determining, with said first version of the source code, the at least two components,
- categorizing the first version of the source code accordingly, using a data structure to store the identification of each component, wherein, in said first version of the source code, each source code element belongs to one only of the at least two components,
- analyzing the first version of the source code to determine dependencies between the at least two components and creating and/or updating the matrix of components (CCM) as a function of the dependencies.

3. The method according to claim 2, **characterized in that** analyzing the first version of the source code to determine dependencies between the at least two components comprises implementing a recursive data structure to identify dependencies between components, including direct function calls, file inclusions, or object relationships.

4. The method according to claim 1, **characterized in that** obtaining (S02) the matrix of features (CFM) comprises:
- obtaining, from a data structure, the at least two features of the executable software product,
- associating, in the matrix of features (CFM), each feature of the at least two features with at least one component of the at least two components determined from said first version of the source code, indicating which components contribute to each feature.

5. The method according to claim 1, **characterized in that** selecting (S03) is performed on the basis of a third matrix, the third matrix being obtained by combining the matrix of components (CCM) and the matrix of features (CFM) so that for each feature of the software product, the components associated to this feature are each marked with a predetermined value in their respective cell.

6. The method according to claim 1, **characterized in that** selecting (S03), among the set of tests, the at least one test to conduct on said executable software product comprises:
- Identifying at least one difference between content of at least one file of the source code of the first version and content of at least one corresponding file of the source code of the second version, thus obtaining a list of components in which the at least one difference is present,
- identifying, a list of features impacted by said at least one difference,
- with the list of features impacted by said at least one difference, determining among the set of tests, the at least one test to conduct on said executable software product.

7. The method according to claim 6, **characterized in that** identifying, the list of features impacted by the at least one difference is performed as a function of said matrix of components (CCM) and said matrix of features (CFM).

8. The method according to claim 6, **characterized in that** identifying, the list of features impacted by the at least one difference is performed ) is performed on the basis of a third matrix, the third matrix being obtained by combining the matrix of components (CCM) and the matrix of features (CFM) so that for each feature of the software product, the components associated to this feature are each marked with a predetermined value in their respective cell.

9. The method according to claim 1, **characterized in that** the set of tests is stored in a database in which each test to perform is associated to at least one feature of said executable software product.

10. An electronic apparatus for determining a set of tests to conduct on an executable software product, the electronic apparatus comprising at least one processing unit and at least one memory, wherein the electronic apparatus being further configured for:
- obtaining (S01) a matrix of components (CCM), wherein the matrix is a two-dimensional square matrix representing relationships between at least two software components defined in a first version of a source code of said software product,
- obtaining (S02) a matrix of features (CFM), wherein the matrix is a two-dimensional data structure mapping relationships between said at least two software components and at least two features supported by said at least two software components,
- with said matrix of components (CCM) and said matrix of features (CFM), selecting (S03), among a set of tests, at least one test to conduct on said executable software product, wherein selecting is performed as a function of a modification made on a second version of the source code of said software product, the modification being detected in at least one of said at least two software components.

11. A computer program comprising instructions causing the implementation of the method according to anyone of the claims 1 to 6 when such instructions are run by a processing unit.

12. A data storage medium comprising a matrix of components (CCM), wherein the matrix is a two-dimensional square matrix representing relationships between at least two software components defined in a first version of a source code of said software product and a matrix of features (CFM), wherein the matrix is a two-dimensional data structure mapping relationships between said at least two software components and at least two features supported by said at least two software components for executing a method for method for determining a set of tests to conduct on an executable software product, according to any of claims 1 to 9.
